# EUROPEAN PATENT APPLICATION

(11) **EP 4 734 110 A1**
(43) Date of publication of application: **29.04.2026**
(21) Application number: 24208865.6
(22) Date of filing: 25.10.2024
(51) Int. Cl.: G11B 27/031, G11B 27/28, G06V 10/82, G06V 20/40

(54) **METHOD, COMPUTER PROGRAM, APPARATUS, AND COMPUTER-READABLE DATA CARRIER FOR AUTOMATED VIDEO DATA CREATION**

(71) Applicant: Elektrobit Automotive GmbH, 91058 Erlangen (DE)
(72) Inventor: Latorre Fortes, Raul, 91058 Erlangen (DE); Zimmerer, Alexander, 91058 Erlangen (DE); Shetty, Pavithree, 91058 Erlangen (DE); Rodrigues, Sandy, 91058 Erlangen (DE); Kleinhenz, Thomas, 91058 Erlangen (DE)
(74) Representative: Aumovio Corporation

(57) **Abstract**

The present disclosure relates to a method, a computer program, an apparatus, and a computer-readable data carrier for automated video data creation. In particular, the concept proposed herein relates to automated creation of video data based on user and in-vehicle media input using artificial intelligence. The method comprises obtaining a user input, automatically labelling stored media data, processing the labelled media data based on the user input, and automatically creating video data from the processed labelled media data.

## Description

The present disclosure relates to a method, a computer program, an apparatus, and a computer-readable data carrier for automated video data creation. In particular, the concept proposed herein relates to automated creation of video data based on user input and in-vehicle media input using artificial intelligence.

Today, video creation is a time consuming, complex and emotional task. Video creation is time consuming, as media to be included in the video need to be manually selected by a user. For example, the user may manually select all the images or videos and provide them to an application to automatically create a video. Video creation is complex, as elaborate video editing tools need to be used. It is emotional, as deciding which scenes to cut out for creating a sufficiently short video is an emotional decision.

Hence, there may be a demand for an improved approach for automated creation of video data from unaltered images or video data, which includes in-vehicle data. This demand may be satisfied by the subject-matter of the appended claims. Exemplary/optional embodiments are disclosed by the appended dependent claims.

In particular, the proposed approach aims to alleviate drawbacks of known approaches by providing a system capable of interpreting user inputs for automated creation of video data from stored media data. It seeks to streamline and enhance user experience by enabling creation of video data that includes user's own media as well as other media, by allowing the user to customize scenes using audio or text inputs. The described approach reduces time, reduces manual work, and eliminates the emotional aspect of having to manually cut out scenes from the final video. Embodiments provide a method for creating video data. The method comprises obtaining a user input, automatically labelling stored media data, processing the labelled media data based on the user input including in-vehicle media input, and automatically creating video data from the processed labelled media data. In this way, a video is created automatically by combining media data based on user requirements acquired by a user input without any further user intervention. The user is not required to use a video editor to manually edit the video for combining media data provided by both the user input as well as the in-vehicle input.

In this document, the term "labelling" means assigning a description or a label that can help categorize the image to a certain group. This can be achieved by one of the distinct methods used in computer vision and machine learning to describe or categorize the image, like "image labelling", "image tagging" and "image captioning." While all the three methods help in describing the image they serve different purpose and levels of details. Image labelling refers to assigning one or more pre-defined labels to categorize an entire image. For example, an image containing a bird can be labelled as "bird." Image tagging refers to attaching multiple descriptive tags. For example, an image containing a bird in the sky can have tags like "bird," "flying," "sky," or "outdoor." Image captioning refers to generating a descriptive sentence that can explain the image. For example, an image containing a bird in the sky can be captioned as "A blue bird flying in the bright sky in the sunshine." Further in the text only the term "label" is used. It is to be understood that this term also means tag and caption.

In practice, the media data may comprise one or more of images, videos, text, speech, and audio.

A skilled person having benefit from the present disclosure will appreciate that the proposed concept may be applied in various applications including vehicles.

Accordingly, the media data may comprise user data and in-vehicle sensor data captured by sensors of a vehicle. For example, the sensors may be cameras, such as an in-cabin camera, a front camera or a rear camera, a microphone, a radar sensor, a lidar sensor, or sensors that send information to the CAN BUS, such as a steering angle sensor or a navigational sensor, e.g. a sensor for a global positioning system (GPS) or an inertial measurement unit (IMU), etc.

In some embodiments, labelling stored media data may be at least partly based on the in-vehicle sensor data. For example, a particular scene of an image, such as tunnel, residential area, parking lot, city street, or highway may be labelled based on GPS data. Information about weather associated with an image may be labelled based on data of climate sensors, etc.

In some embodiments, the user input may comprise one or more of audio input and text input. In case of audio input, the audio input may be converted to text using a speech-to-text module. A skilled person will appreciate that, for this, various speech-to-text modules for speech recognition may be applied. For example, the user may provide details that are desired for a video via an audio device. Such desired details may include, for example, a date of a road-trip, scenes with only sunny days, all scenes must include specific person, etc.

In some embodiments, processing the labelled media data based on the user input may comprise at least one of filtering the labelled media data, grouping the labelled media data, and combining the labelled media data. Additionally, processing the labelled media may comprise managing or storing the labelled media data.

In some embodiments, automatically labelling the stored media data and processing the labelled media data based on the user input may be performed by a first artificial intelligence (AI) model. For example, the first artificial intelligence model may be a generative artificial intelligence model or a general-purpose artificial intelligence model.

In some embodiments, automatically creating video data from the processed labelled media data may be performed by a second artificial intelligence model. For example, the second artificial intelligence model may be a generative artificial intelligence model or a general-purpose artificial intelligence model.

In some embodiments, automatically labelling the stored media data may make use of a prompt. The user data and the in-vehicle sensor data may be attached to such a prompt.

Further embodiments provide a computer program comprising instructions which, when the computer program is executed by a computer, cause the computer to carry out an embodiment of any one of the proposed methods.

Still further embodiments provide an apparatus comprising one or more interfaces for communication and a data processing circuit configured to execute an embodiment of any one of the proposed methods.

Other embodiments provide a computer-readable data carrier having stored thereon the proposed computer program.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a flow chart schematically illustrating an embodiment of a method for automated video data creation;
Fig. 2 schematically shows an exemplary embodiment and use case;
Fig. 3 schematically shows another exemplary embodiment and use case;
Fig. 4 schematically shows a process flow of video data creation;
Fig. 5 schematically shows another process flow of video data creation;
Fig. 6 schematically shows yet another process flow of video data creation;
Fig. 7 shows a block diagram schematically illustrating an embodiment of an apparatus according to the proposed approach.

Embodiments of the present disclosure are based on the finding that artificial intelligence may be able to serve to automatically label media data and to automatically create video data from such labelled media data.

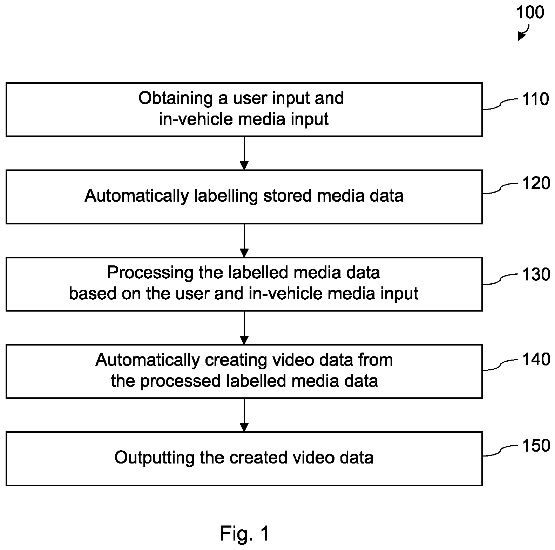

Further aspects and details are described below with reference to Fig. 1. It is noted that, even though embodiments may be described only in the context of automotive applications, features and aspects of embodiments may also apply to non-automotive applications.

Fig. 1 shows a flow chart schematically illustrating an embodiment of a method 100 for automated video data creation.

As can be seen from the flow chart, the method 100 comprises obtaining 110 a user input and in-vehicle media input. For obtaining a user input, a microphone or any other type of sound recorder can be used to record the voice and/or sound of a user. The audio input may comprise any kind of verbal expressions of a user, e.g., commands, questions, expressions of individual needs or wishes, and/or the like. The microphone/audio recorder can provide an audio signal of the recorded audio input. Alternatively, the user input may be a text input. For this, a keyboard or a touch screen may be used. The in-vehicle media input may include video, images, and other data coming from in-vehicle sensors.

Further, the method 100 comprises automatically labelling 120 stored media data. For this, a first artificial intelligence model may be used, e.g., a generative artificial intelligence model, a general-purpose artificial intelligence model, or a CNN (Convolutional Neural Network) artificial intelligence model. Of course, also other types of artificial intelligence models may be used.

The media data may comprise one or more of images, videos, text, speech, and audio. Furthermore, the media data may comprise user data and in-vehicle sensor data captured by sensors of a vehicle. For example, the sensors may be in-cabin sensors, such as a camera, a microphone, etc., sensors placed on the outer part of the vehicle, such as a camera, radar sensor, a lidar sensor, a microphone, etc., and sensors that send information to the CAN BUS, such as a steering angle sensor or a navigational sensor, e.g. a GPS sensor or IMU, etc. Labelling 120 stored media data may be at least partly based on the in-vehicle sensor data. In addition, labelling 120 stored media data may be at least partly based on the user input.

Further, the method 100 comprises processing 130 the labelled media data based on the user input. For example, the labelled media data may be filtered, grouped, or combined in accordance with requirements included in the user input. Furthermore, the labelled media data may be managed and stored

Further, the method 100 comprises automatically creating 140 video data from the processed labelled media data. For this, a second artificial intelligence model may be used, e.g., a generative artificial intelligence model, a general-purpose artificial intelligence model, or a CNN AI model. Of course, also other types of artificial intelligence models may be used. The created video data is customized according to the user input, where the user has described specific types of scenes that should be included in the video. The video data can also be created based on video storyline instructions provided by the user input. The term "customize" means that the video data is created by combining original/unaltered images or videos.

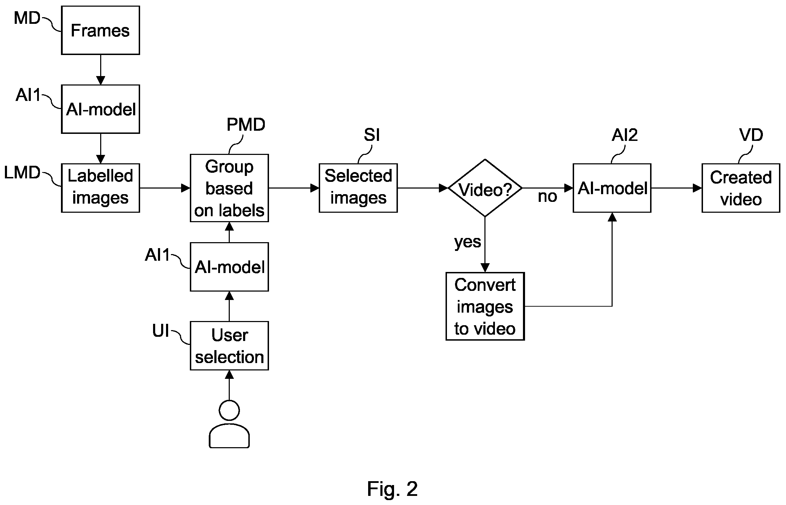

Further, the method 100 comprises outputting 150 the created video data. For this, the created video data may be sent to the user. For example, it may be sent to the vehicle infotainment system, to a vehicle app, or to a user app. Alternatively or in addition, the created video data may be sent directly to a social media platform. Further details and aspects are described below in more detail with reference to exemplary embodiments schematically illustrated by Figs 2 to 6. For automated creation of video data, an artificial intelligence pipeline is used.

Fig. 2 schematically shows an exemplary embodiment and use case. Stored media data MD are automatically labelled by a first artificial intelligence model AI1 to obtain labelled media data LMD. For example, the first artificial intelligence model AI1 may be a generative artificial intelligence model or a general-purpose artificial intelligence model. These types of models are able to analyze image input for image labelling purposes. A user provides a user input UI, e.g., a selection of details that are desired for the video. Such desired details may include, for example, a date of a road-trip, scenes with only sunny days, all scenes must include specific person, etc. Preferably, the user input UI is an audio input provided via an audio device. The user input UI is provided to an artificial intelligence model AI1, which may be the same as the first artificial intelligence model AI1, as generative artificial intelligence models or general-purpose artificial intelligence models are likewise capable of interpreting audio input for scene customization purposes. The artificial intelligence model AI1 processes the images according to the user requirements to obtain processed labelled media data PMD. For example, the labelled media data may be filtered, grouped, or combined. The resulting selected images SI are provided to a second artificial intelligence model AI2. For example, the second artificial intelligence model AI2 may be a generative artificial intelligence model or a general-purpose artificial intelligence model. If necessary, at least some of the images may be converted or combined to video before being provided to the second artificial intelligence model AI2. The second artificial intelligence model AI2 then provides a short video VD, e.g., a video of 1 to 10 minutes, of the road trip with music and other animations, if applicable and required by the user. The video VD can be sent to the user or directly to social media.

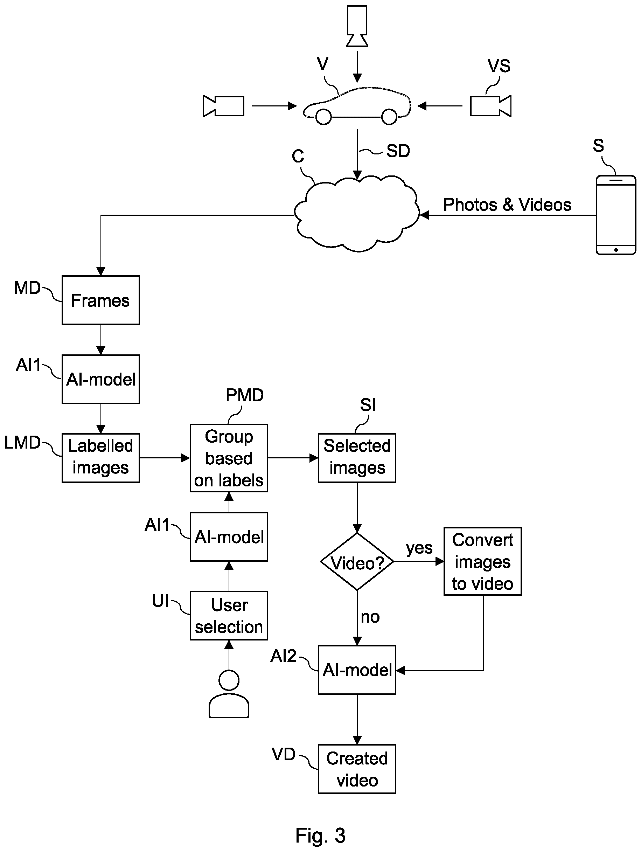

Fig. 3 schematically shows another exemplary embodiment and use case. This embodiment is largely identical to the embodiment shown in Fig. 2. In this embodiment, the stored media data MD originate from a cloud C, in which photos and video provided by the user, e.g., via a smartphone S, as well as in-vehicle sensor data SD captured by sensors VS of a vehicle V are stored. For example, the sensors VS may be in-cabin sensors, such as a camera, a microphone, etc., sensors placed on the outer part of the vehicle, such as a front camera or a rear camera, a radar sensor, a lidar sensor, a microphone, etc., and sensors that send information to the CAN BUS, such as a steering angle sensor or a navigational sensor, e.g. a sensor for a global positioning system or an inertial measurement unit, etc.

As cloud storage may become expensive in case of continuous recording of the environment, a data management system is preferably used. This data management system may determine a trade-off of continuous recording vs. noncontinuous recording. Furthermore, redundant or low-quality images may be excluded from storage in the cloud C, as they will likely not be needed for video creation.

In this embodiment, the resulting customized video VD includes user's own media as well as vehicle media, such as images captured by the front camera or the rear camera or in-cabin images. Such in-cabin images may contain a logo of the vehicle manufacturer or of the video creation solution for marketing purposes.

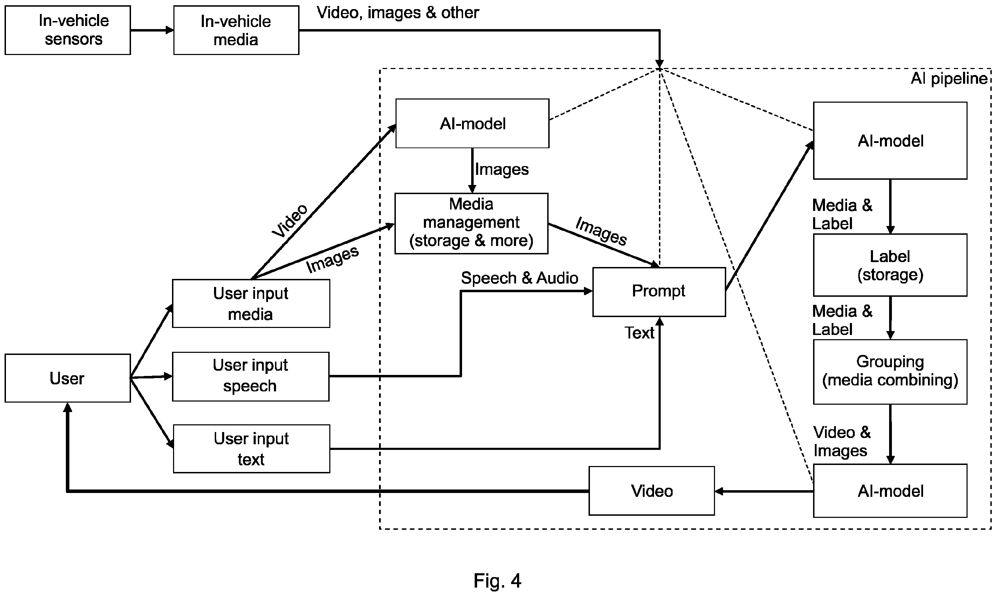

Fig. 4 schematically shows a process flow of video data creation. Depicted is an artificial intelligence pipeline for automated video creation customized by user input, which makes use of user media and in-vehicle media provided by in-vehicle sensors. The user provides input in the form of media, e.g., videos and images, speech, or text. In this embodiment, videos provided by the user are processed by an artificial intelligence video analyzer to derive images for further processing. An artificial intelligence model, in particular a generative artificial intelligence model or a general-purpose artificial intelligence model, is used for automatically labelling images based on the user input. For this purpose, specific prompts are designed, which cause the artificial intelligence model to only provide the specific outputs that are of interest. The data provided by the user, or the in-vehicle data may be attached to such a prompt. For example, a prompt could be designed as follows:
Given the following information, please provide the image labels for the image that follows:
- weather: "rainy | snowy | clear | overcast |undefined | partly cloudy | foggy"
- scene: "tunnel | residential | parking lot | undefined | city street | gas station | highway"
- time of day: "daytime | night | dawn/dusk | undefined"

An answer provided by the artificial intelligence model could be as follows:
Based on the information you provided and the image you sent, here are the image labels:
- weather: partly cloudy
- scene: highway
- time of day: daytime

A sensor data input analyzer feature of the artificial intelligence model is used for labelling sensor data. An audio feature together with a speech-to-text feature of the artificial intelligence model is used for customizing the created video according to the user requirements. An image analysis feature of the artificial intelligence model is used for labelling the images. The media data are automatically filtered and combined based on the labelled images and according to the user input. An artificial intelligence model is then used for automatically creating a video with the customized images and videos. The resulting video is provided to the user or directly to social media.

The in-vehicle media provided to the artificial intelligence pipeline can be used in various ways, as indicated by the dashed lines. For example, the videos, images, and other data cand be used by the artificial intelligence video analyzer for further processing. They may likewise be used by the prompt to further process or enhance the prompt by combining them with other input the prompt receives, such as user input or images. Finally, they may be used either of the two AI models present in AI pipeline for further processing.

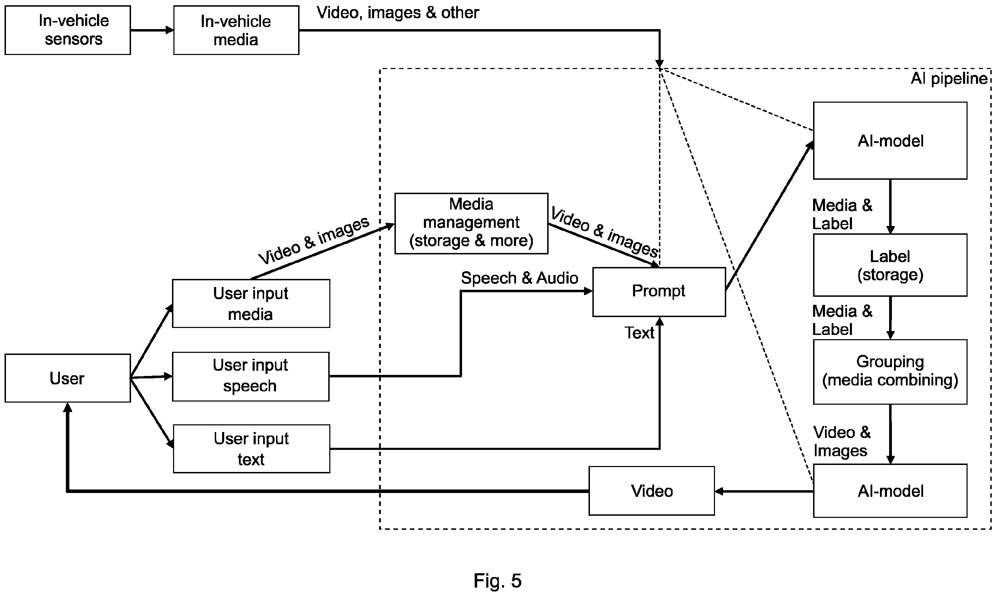

Fig. 5 schematically shows another process flow of video data creation. The process flow is largely identical to the process flow shown in Fig. 4. However, in this embodiment, no dedicated artificial intelligence video analyzer is used. Instead, the video analysis feature of the generative or general-purpose artificial intelligence model is used for labelling the videos.

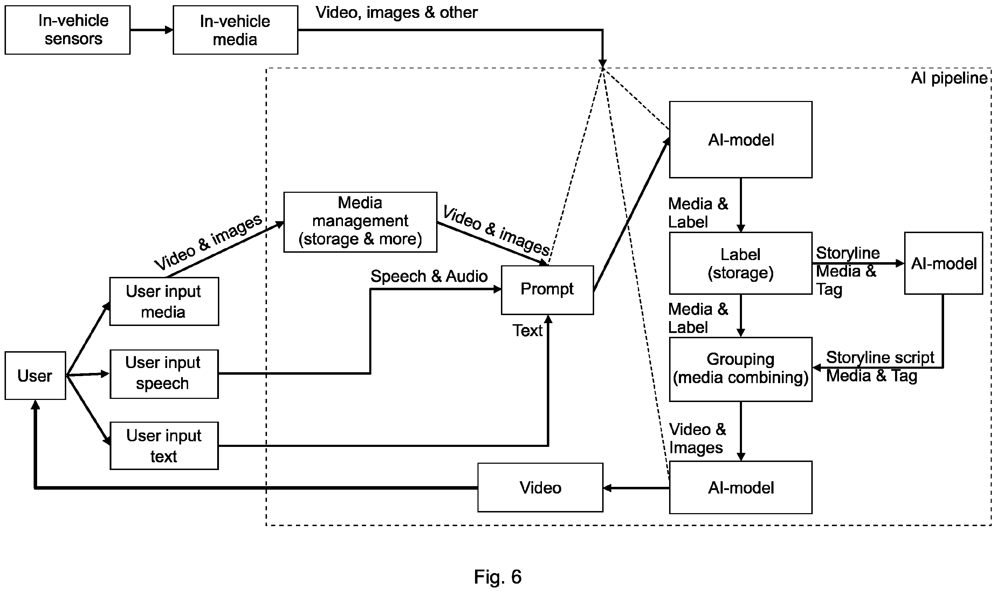

Fig. 6 schematically shows yet another process flow of video data creation. The process flow is largely identical to the process flow shown in Fig. 5. However, in this embodiment, the automatic video creation is further based on video storyline instructions provided by the user input. As generative artificial intelligence models or general-purpose artificial intelligence models are capable of analyzing video input for storyline purposes, such an artificial intelligence model may be used for providing a storyline script based on the user instructions.

It is noted that the term "vehicle/s" used in the above embodiments is to be interpreted broadly in context of the present disclosure. So, vehicles according to the present disclosure may include any kind of vehicle, including various ground vehicles (e.g., car, truck, bus, motorcycle, and/or the like), various watercrafts (e.g., boat), various aircrafts (e.g., planes, helicopters), and/or a combination thereof (e.g., amphibious vehicle).

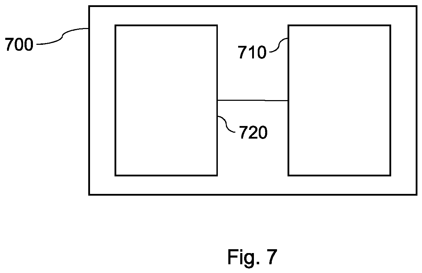

Fig. 7 shows a block diagram schematically illustrating an embodiment of such an apparatus 700. The apparatus 700 comprises one or more interfaces 710 for communication and a data processing circuit 720 configured to execute the proposed method.

In embodiments, the one or more interfaces 710 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 720 may correspond to or comprise any type of programable hardware. So, examples of the data processing circuit 720, e.g., comprise a memory, microcontroller, field programable gate arrays, one or more central, and/or graphical processing units. To execute the proposed method, the data processing circuit 720 may be configured to access or retrieve an appropriate computer program for the execution of the proposed method from a memory of the data processing circuit 720 or a separate memory which is communicatively coupled to the data processing circuit 720.

In practice, the proposed apparatus 700 or at least parts thereof may be installed on or in a vehicle. So, embodiments may also provide a vehicle comprising the proposed apparatus 700. In implementations, the apparatus 700 may be part or a component of an infotainment system.

However, in implementations, computing resources for the vehicle may be outsourced to an external server separate from the vehicle. In such implementations, the proposed approach may be also implemented outside of the vehicle, e.g., on a separate server.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for automated video data (VD) creation, the method (100) comprising:
obtaining (110) a user input (UI) and in-vehicle media input (SD);
automatically labelling (120) stored media data (MD);
processing (130) the labelled media data (LMD) based on the user input (UI) and in-vehicle input (SD); and
automatically creating (140) video data (VD) from the processed labelled media data (PMD).

2. The method (100) of claim 1, wherein the media data (MD) or the in-vehicle media input (SD) comprises one or more of images, videos, text, speech, and audio.

3. The method (100) of claim 1 or 2, wherein the media data (MD) comprises user data (UD) and in-vehicle sensor data (SD) captured by sensors (VS) of a vehicle (V).

4. The method (100) of claim 3, wherein the sensors (VS) of the vehicle (V) comprise one or more of an in-cabin camera, a front camera, a rear camera, a microphone, a radar sensor, a lidar sensor, and a navigational sensor.

5. The method (100) of claim 3 or 4, wherein labelling (120) stored media data (MD) is at least partly based on the in-vehicle sensor data (SD).

6. The method (100) of any one of the preceding claims, wherein the user input (UI) comprises one or more of audio input and text input.

7. The method (100) of any one of the preceding claims, wherein processing (130) the labelled media data (LMD) based on the user input (UI) comprises at least one of:
filtering the labelled media data (LMD);
grouping the labelled media data (LMD); and
combining the labelled media data (LMD).

8. The method (100) of any one of the preceding claims, wherein automatically labelling (120) the stored media data (MD) and processing (130) the labelled media data (LMD) based on the user input (UI) is performed by a first artificial intelligence model (AI1).

9. The method (100) of claim 8, wherein the first artificial intelligence model (AI1) is a generative artificial intelligence model or a general-purpose artificial intelligence model.

10. The method (100) of any one of the preceding claims, wherein automatically creating (140) video data (VD) from the processed labelled media data (PMD) is performed by a second artificial intelligence model (AI2).

11. The method (100) of claim 10, wherein the second artificial intelligence model (AI2) is a generative artificial intelligence model or a general-purpose artificial intelligence model or a convolutional neural network artificial intelligence model.

12. The method (100) of any one of the preceding claims, wherein automatically labelling (120) the stored media data (MD) makes use of a prompt.

13. A computer program comprising instructions which, when the computer program is executed by a computer, cause the computer to carry out any one of the methods of any one of the claims 1 to 12.

14. An apparatus (700) comprising:
one or more interfaces (710) for communication; and
a data processing circuit (720) configured to execute any one of the methods (100) of any one of the claims 1 to 12.

15. A computer-readable data carrier having stored thereon the computer
program of claim 13.
